# EUROPÄISCHE PATENTSCHRIFT

(11) **EP 0 640 789 B1**
(45) Veröffentlichungstag und Bekanntmachung des Hinweises auf die Patenterteilung: **01.10.1997**
(21) Anmeldenummer: 94105980.0
(22) Anmeldetag: 18.04.1994
(51) Int. Cl.: F16M 11/38, G10G 5/00, G10H 1/32, A47B 9/16

(54) **Ständer, insbesondere Keyboard-Ständer**
Stand, especially keyboard stand
Support, en particulier support de clavier

(30) Priorität: 31.08.1993 DE 9313078 U
(43) Veröffentlichungstag der Anmeldung: 01.03.1995
(73) Patentinhaber: Malizia, Mario, I-60022 Castelfidardo (AN) (IT)
(72) Erfinder: Malizia, Mario, I-60022 Castelfidardo (AN) (IT)
(74) Vertreter: Puschmann, Heinz H.

(56) Entgegenhaltungen:
- DE-C- 4 225 975
- DE-U- 9 313 078
- US-A- 4 917 341

## Beschreibung

Die Erfindung betrifft einen Ständer, insbesondere einen Keyboard-Ständer mit zwei aus einer Ruhelage in eine Arbeitslage scherenartig schwenkbar miteinander verbundenen doppel-T-förmigen Ständer-Segmenten, deren Schwenkachse ein den Schwenkwinkel und damit die Arbeitshöhe der Ständer-Segmente bestimmendes Riegelgesperre zugeordnet ist, dessen Rastelement dem einen und dessen entgegen der Kraft einer Feder wirkendes Riegelelement dem anderen Ständer-Segment zugeordnet sind.

Ein solcher Ständer ist aus der US-PS 4.917.341 bekannt. Dort ist dem Riegelelement ein Handgriff zugeordnet, mittels dem das Riegelelement gegen die Kraft der Feder aus dem jeweils eingenommenen Rastloch des Rastelementes herausgezogen wird, um die feste Verbindung zwischen den Ständer-Segmenten aufzuheben und diese verschwenken zu können. Hierbei muß der Ständer mit der einen Hand festgehalten und mit der anderen Hand am Handgriff gezogen werden. Für das relative Verschwenken der Ständer-Segmente in eine neue Arbeitslage verbleibt dann keine Hand frei, so daß hierzu ein Widerlager zu suchen ist, an dem sich das eine Ständer-Segment zum Verschwenken des anderen Ständer-Segmentes abstützen kann. In der Regel wird hierzu ein Fuß des Benutzers verwendet, was einfach ist, wenn beider Ständer-Segmente bereits ausgeschwenkt sind, da dann ein Fuß auf einen der an den unteren Enden der Ständer-Segmente quer zu diesen befestigten Fußteilen gestellt werden kann. Befindet sich jedoch der Ständer in seiner Ruhelage, liegen also beide Fußteile nebeneinander, so ist diese Art des Festhaltens des einen Ständer-Segmentes mittels eines Fußes schwierig, wenn nicht gar unmöglich. Diese Art der Betätigung ist also kompliziert und es besteht die Gefahr von Verletzungen der Hände des Benutzers, insbesondere beim Überführen der Ständer-Segmente in ihre Ruhelage, da hierbei leicht die Finger der Hand, die das eine Ständer-Segment umfassen, nach Entriegeln des Riegelgesperres und Überführen des anderen Ständer-Segmentes in die Ruhelage, gequetscht werden können.

Der Bedarf an solchen Ständern, die auch für andere Zwecke, beispielsweise zur Aufnahme einer Tischplatte, dienen können, ist jedoch groß, da solche Ständer im eingeklappten Zustand wenig Raum beanspruchend gelagert werden können, andererseits aber ein stabiles Gestell zur Aufnahme von Lasten, z.B. in Form des genannten Keyboards oder ähnlichem verkörpern.

Der Erfindung liegt daher die Aufgabe zugrunde, solche Ständer derart weiterzubilden, daß ihr Betätigen einfacher und sicherer als bisher erfolgen kann.

Ausgehend von einem Ständer der eingangs genannten Art ist diese Aufgabe gemäß der Erfindung dadurch gelöst, daß das Riegelgesperre ein Richtsperrgetriebe ist, dessen Rastscheibe mehrere die Arbeitslagen bestimmende Rastnuten aufweist, während das Riegelelement ein tangential zur Rastscheibe angeordneter in radialer Richtung in die Rastnuten eingreifender Rasthebel ist, dem ein zwischen zwei Anschlägen verschwenkbar gelagertes Schaltglied (Schlepphebel) zugeordnet ist, über das der Rasthebel zwischen dem ersten und dem zweiten Anschlag außer Eingriff mit der Rastscheibe gehalten und nach Überführung in die erste Arbeitslage, der der Anschlag zugeordnet ist, zwecks Eingriffs in die Rastscheibe freigegeben wird und nach Einnahme seiner durch den weiteren Anschlag bestimmten letzten Arbeitslage, in die das Schaltglied vom Rasthebel mitgeschleppt wird, außer Eingriff mit der Rastscheibe bringbar ist.

Nach einem weiteren Merkmal der Erfindung ist die Rastscheibe auf der Innenseite einer mit ihrem Zentrum die Schwenkachse der Ständer-Segmente umfassenden napfförmigen Gehäusescheibe konzentrisch zur Schwenkachse und das Riegelelement ebenfalls auf der Innenseite einer mit ihrem Zentrum die Schwenkachse der Ständer-Segmente umfassenden napfförmigen Gehäusescheibe gleicher Ausbildung exzentrisch zur Schwenkachse angeordnet, wobei jede Gehäusescheibe jeweils mit ihrer Außenfläche an je einem Ständer-Segment befestigt ist, und wobei beide Gehäusescheiben einander umfassend das Richtsperrgetriebe umschließen.

Weitere Merkmale der Erfindung ergeben sich aus den Unteransprüchen.

Die erfindungsgemäße Ausbildung des Ständers ermöglicht nunmehr ohne Betätigung eines Handgriffes allein durch Bewegen der Ständerelemente diese aus ihrer Ruhelage in die gewünschte durch die Rastnuten der Rastscheibe definierten Arbeitslagen zu bewegen sobald nach einem Bewegen über die erste Arbeitslage hinaus das Richtriegelgetriebe entriegelt ist bzw. nach Überführung der Ständer-Segmente in die letzte Arbeitslage diese in die anfangs eingenommene Ruhelage zu überführen. Eine solche Ausbildung ermöglicht also den Ständer auf einfache Weise, ohne große Kraftanstrengung und ohne die Gefahr einer Fingerverletzung mittels zweier Hände jeweils aus der Ruhelage in eine gewünschte Arbeitslage und aus dieser in die Ruhelage zurückzubewegen. Da alle Bauteile des Richtsperrgetriebes von den Gehäusescheiben umschlossen sind, ist ferner ein gefälliges Aussehen erreicht.

Die Erfindung ist nachfolgend an Hand eines in der Zeichnung mehr oder minder schematisch dargestellten Ausführungsbeispiels beschrieben. Es zeigen
- Figur 1: eine perspektivische Darstellung eines findungsgemäßen Ständers in einer Gebrauchslage,
- Figur 2: eine Draufsicht auf das dem Ständer nach Figur 1 zugeordneten Richtsperrgetriebe, in Ruhelage, wobei eine Gehäusehälfte teilweise aufgebrochen ist,
- Figur 3: eine Draufsicht auf die andere Gehäusehälfte des dem Ständer nach Figur 1 zugeordneten Richtsperrgetriebes,
- Figur 4: eine im Schnitt dargestellte Explosionsdarstellung des Richtsperrgetriebes und
- Figur 5: ein Ausschnitt einer Draufsicht auf das dem Ständer nach Figur 1 zugeordnete Richtgesperre.

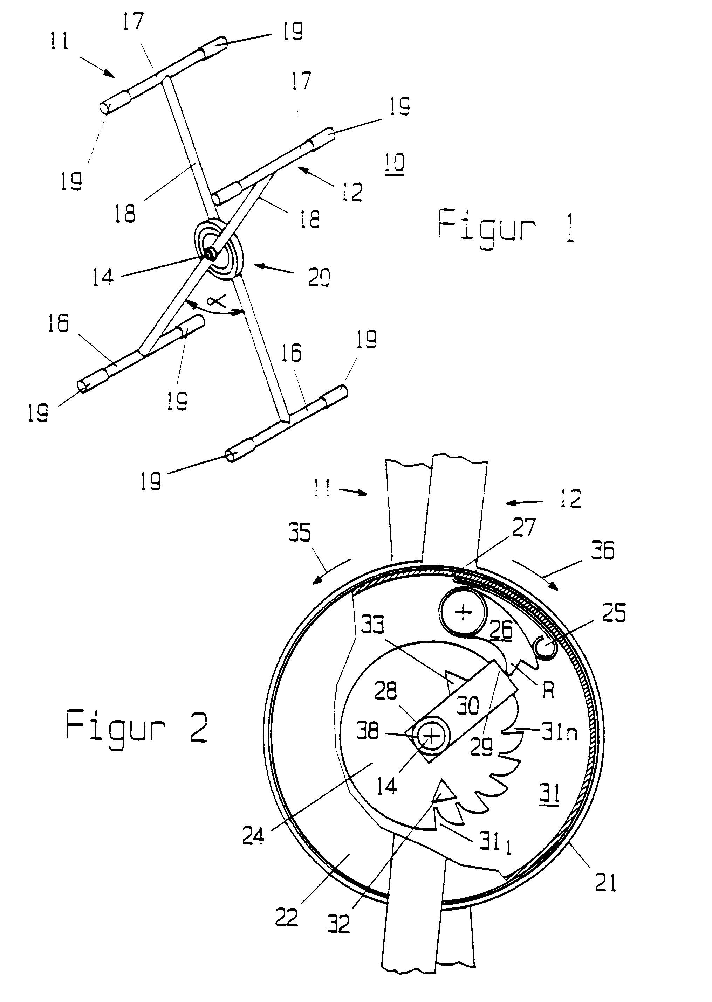

Ein in Figur 1 insgesamt mit der Bezugsziffer 10 bezeichneter Ständer umfaßt zwei untereinander gleichartig ausgebildete, doppel-T-förmige Ständer-Segmente 11 und 12, die um eine in ihrem Zentrum liegende Achse 14 scherenartig schwenkbar sind.

Jedes Ständer-Segment umfaßt ein Fußteil 16 und ein Tragteil 17, die über ein Mittelstück 18 miteinander fest verbunden sind. Die Enden der Fuß- und Tragteile sind jeweils mit einem rutschfesten Überzug 19 versehen.

Die vorstehend beschriebenen Ständer-Segmente bestehen aus einem Metallrohr von rundem oder rechtwinkligen Querschnitt mit einer der aufzunehmenden Last entsprechenden Wandstärke.

Der schwenkbaren Verbindung der Ständer-Segmente dient ein Richtsperrgetriebe 20, das zentrisch zu der Achse 14 angeordnet und von zwei napfförmig ausgebildeten Gehäusescheiben 21 und 22 umfaßt ist, die jeweils mit ihren Außenseiten mit je einem Mittelstück der zugehörigen Ständer-Segmente 11 und 12 fest verbunden sind; vergleiche auch Figur 4. Im zusammengefügten Zustand gemäß Figur 1 greifen beide Gehäusescheiben übereinander und umschließen einen Innenraum 23, in dem das noch zu beschreibende Richtsperrgetriebe angeordnet ist.

Das Richtsperrgetriebe 20 umfaßt, wie die Figuren 2 bis 5 zeigen, eine der Gehäusescheibe 21 zugeordnete Rastscheibe 24 und eine der Gehäusescheibe 22 zugeordnete unter der Wirkung einer in einem Durchbruch 27 der Gehäusescheibe 22 gelagerten Feder 25 stehenden Rasthebel 26. Wie insbesondere die Figuren 2 und 4 zeigen, ist die Rastscheibe 24 konzentrisch zur Schwenkachse 14 angeordnet und auf der Innenseite der Gehäusescheibe 21 fest angeordnet, während der Rasthebel 26 exzentrisch zur Schwenkachse 14, also tangential zur Rastscheibe 24 versetzt auf der Innenseite der Scheibe 22 ortsfest, aber schwenkbar angeordnet und von der Feder 25 kraftbeaufschlagt ist. Gegenüber dem Federangriffspunk weist der Rasthebel 26 eine klauenförmige Rast R auf.

Die Rastscheibe 24 weist an ihrem Umfange in untereinander gleichen oder unterschiedlichen Winkel-Abständen angeordnete Rastnuten 31₁ bis 31ₙ auf, die im Zusammenwirken mit dem Rasthebel den jeweiligen Öffnungswinkel der Ständer-Segmente 11 und 12 und damit die Standhöhe der Tragteile über dem Boden, auf dem die Fußteile aufliegen, definieren. Die Ausgestaltung von Rastnuten 31₁ bis 31ₙ und Rast ist derart gewählt, daß die Rast R in die Rastnuten 31₁ bis 31ₙ eingreifen und im eingegriffenen Zustand das Richtsperrgetriebe in der einen Bewegungsrichtung sicher sperrt.

Der Rastscheibe 24 ist ferner ein mit einer Abbiegung 29 versehener Schlepphebel 30 zugeordnet, der ebenfalls auf der Schwenkachse 14 drehbar gelagert und in seiner Bewegung von Anschlägen 32 und 33 begrenzt ist. Eine der Ruhelage des Ständers entsprechende Lage von Rasthebel und Rastscheibe, in der die Ständer-Segmente 11 und 12 etwa parallel zueinander liegen, ist in Figur 2 gezeigt.

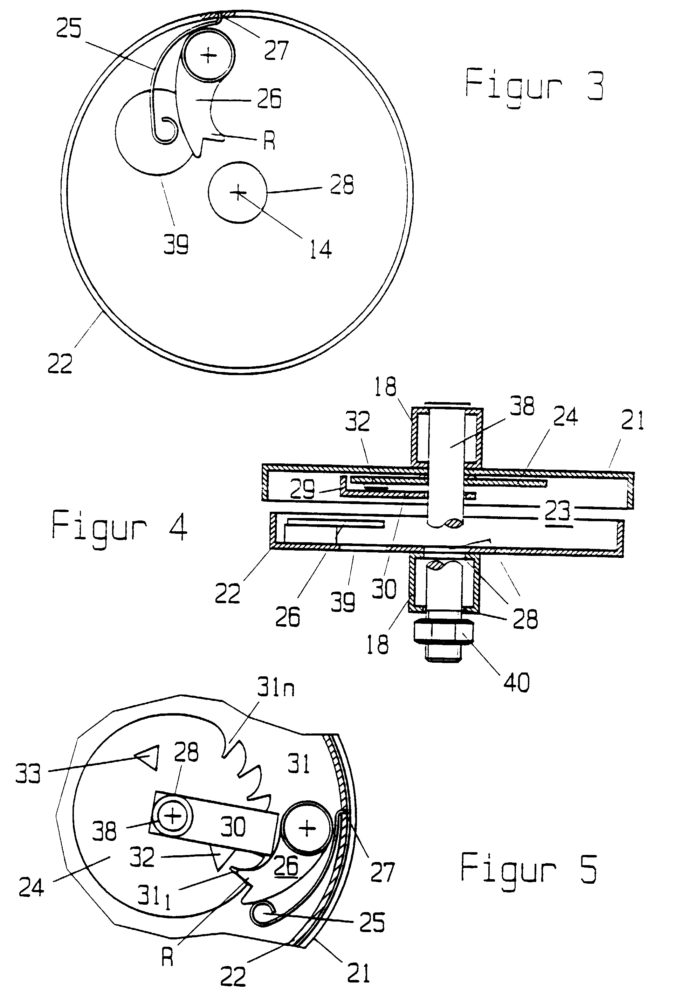

Beim Bewegen der Ständer-Segmente 11 und 12 aus ihrer Ruhelage in Richtung der Pfeile 35 und 36 wird zunächst der Schlepphebel 30 von dem Rasthebel 26 in Richtung des Pfeiles 36 solange mitgenommen, bis der Schlepphebel 30 vom Anschlag 32 angehalten wird, so daß bei Weiterführung der Bewegung der Ständer-Segmente 11 und 12 die Rast R des Rasthebels 26 über die Abbiegung 29 gleitet und in die erste, der niedrigsten Arbeitslage des Ständers entsprechende Rastnut 31₁ der Rastscheibe 24 einrastet, wie das aus Figur 5 ersichtlich ist.

Der ersten Rastnute 31₁ benachbart ist der genannte Anschlag 32; beide Anschläge 32 und 33 sind auf der Rastscheibe 24 aufgeschweißt und weisen einen Winkelabstand von etwa 90° auf.

Durch anschließendes Bewegen der Ständer-Segmente entgegen der Richtung der Pfeile 35 und 36 nehmen diese jeweils die durch die Rastnuten 31₁ bis 31ₙ im Zusammenwirken mit dem Rasthebel 26 definierten Winkellagen und damit die möglichen unterschiedlichen Arbeitslagen ein.

Die Schwenkachse 14 ist durch einen Lagerbolzen 38 verkörpert, der im Zentrum der Gehäusescheibe 21 des Ständer-Segmentes 11 befestigt ist und im zusammengesetzten Zustand gemäß Figur 1 durch eine zentrische Öffnungen 28 in der Gehäusescheibe 22 des Ständer-Segmentes 12 ragt, zwecks Aufnahme einer die Ständer-Segmente und das beschriebene Richtsperrgetriebe zusammenhaltenden Mutter 40; vgl. auch Figur 4. Die Gehäusescheibe 22 weist ferner eine Montageöffnung 39 auf, um den Rasthebel 26 bei der Montage von außen entgegen der Kraft der Feder 25 verschwenken zu können.

Um den vorstehend beschriebenen Ständer aus seiner in Figur 2 dargestellten Ruhelage in die in Figur 1 dargestellte Arbeitslage zu überführen, sind am zweckmäßigsten die Kopfteile 16 der Ständer-Segmente 11 und 12 mit je einer Hand zu umfassen und jeweils in Richtung der Pfeile 35 und 36 auseinander zu bewegen, bis der vom Rasthebel geschleppte, auf dem Lagerbolzen 38 drehbewegliche Schlepphebel 30 in Anlage am Anschlag 32 gelangt, so daß beim Weiterbewegen der Ständer-Segmente der Rasthebel 26 zum Einrasten in die Rastnute 31₁ freigegeben wird. Durch weiteres Bewegen der Ständer-Segmente 11 und 12 in Richtung der Pfeile 35 und 36 und die dadurch erfolgende Relativbewegung von Rastscheibe 24 und Rasthebel 26 erreicht der Rasthebel 26 die auf dem Umfang der Rastscheibe 24 befindliche erste Rastnute 31₁. Die Rast R greift nunmehr unter dem Einfluß der Feder 25 eingreift in die erste Rastnute 31₁ ein und arretiert damit die Ständer-Segmente in der eingenommenen Winkellage .

Entspricht diese Winkellage nicht dem Bedürfnis des Benutzers, so kann durch Bewegen der Ständer-Segmente entgegen der Richtung der Pfeile 35 und 36 eine der nächsten Rastnuten 31 erreicht werden, in die die Rast R des Rasthebels 26 eingreift und die Ständer-Segmente arretiert. Hierbei schleppt der Rasthebel 26 mit der Rückseite der Rast R den Schlepphebel 30 in Richtung des Anschlages 33 zurück, wobei die Rast R jeweils in jede der nachfolgenden Rastnuten 31 der Rastscheibe 24 einrastet.

Sollen die Ständer-Segmente wieder in ihre Ruhelage überführt werden, in der diese etwa parallel zueinander liegen, so sind die Ständer-Segmente in Richtung der Pfeile 35 und 36 bis über die letzte Rastnut 31ₙ zu bewegen; hierbei gelangt der Schlepphebel 30 gegen den Anschlag 33 und die Rast R des Rasthebels 26 gleitet auf die Abbiegung 29 des Schlepphebels 30 auf, so daß der Rasthebel 26 in seine unwirksame Lage bewegt wird, da der Schlepphebel 30 an dem das weitere Verschwenken des Schlepphebels 30 verhindernden Anschlag 33 anliegt. Hier haben die Ständer-Segmente ihre Ruhelage eingenommen.

Werden diese dann in entgegengesetzter Richtung, nämlich in Richtung der Pfeile 35 und 36 in die Freigabelage bewegt, bis der Hebel 30 am Anschlag 32 anliegt, so daß der Rasthebel über die Abbiegung 29 bewegt und unter dem Einfluß der Feder 25 in Eingriff mit der ersten Rastnute 31₁ der Rastscheibe 24 gelangt, kann erneut eine gewünschte Arbeitslage eingestellt werden.

Infolge der Hebelwirkung der Mittelstücke 18 der Ständer-Segmente und der gewählten Kurvenform der Rastnuten sind die Federkräfte am Richtsperrgetriebe leicht zu überwinden, was einen hohen Bedienungskomfort ermöglicht; andererseits ist durch die Ausbildung von Rasthebel und der Kurvenform der Rastnuten eine sichere Arretierung der Ständer-Segmente in der jeweils eingestellten Lage gewährleistet; hierzu weist der Rasthebel eine entsprechend der Kurvenform der Rastnuten gewählte Kurvenform der Rast R des Rasthebels 26 auf.

Die Abbiegung 29, auf der die Rast R des Rasthebels 26 aufgleitet, muß so bemessen sein, daß dieser beim Bewegen der Ständer-Segmente in die Ruhelage - nachdem der Schlepphebel 30 am Anschlag 33 anliegt - bis zum Erreichen der Ruhestellung der Ständer-Segmente auf der Abbiegung verbleibt, da sonst die Funktion nicht mehr gegeben wäre.

Der vorstehend beschriebene Ständer ist von besonderem Vorteil sowohl bei seinem Einsatz als sog. Keyboard-Ständer (ein- oder mehretagig) und bei allen Arten von Musikinstrument-Stativen als auch für andere Anwen-dungszwecke, wie z.B. für Tische, Sitze, Verkaufsständer, Wäschetrockner u.ä..

## Patentansprüche

1. Ständer, insbesondere Keyboard-Ständer mit zwei, aus einer Ruhelage in eine Arbeitslage scherenartig schwenkbar miteinander verbundenen, doppel-T-förmigen Ständer-Segmenten, deren Schwenkachse ein den Schwenkwinkel und damit die Arbeitshöhe der Ständer-Segmente bestimmendes Riegelgesperre zugeordnet ist, dessen Rastelement dem einen und dessen entgegen der Kraft einer Feder wirkendes Riegelelement dem anderen Ständer-Segment zugeordnet sind, **dadurch gekennzeichnet**, **daß** das Riegelgesperre ein Richtsperrgetriebe (20) ist, dessen Rastscheibe (24) mehrere die Arbeitslagen bestimmende Rastnuten (31₁ bis 31ₙ) aufweist, während das Riegelelement ein tangential zur Rastscheibe (24) angeordneter in radialer Richtung in die Rastnuten (31) eingreifender Rasthebel (26) ist, dem ein zwischen zwei Anschlägen (32, 33) verschwenkbar gelagertes Schaltglied (30) zugeordnet ist, über das der Rasthebel zwischen dem ersten und dem zweiten Anschlag außer Eingriff mit der Rastscheibe gehalten und nach Überführung in die erste Arbeitslage (31₁), der der Anschlag (32) zugeordnet ist, zwecks Eingriffs in die Rastscheibe (24) freigegeben wird und nach Einnahme seiner durch den weiteren Anschlag (33) bestimmten letzten Arbeitslage (31ₙ), in die das Schaltglied (30) vom Rasthebel (26) mitgeschleppt wird, außer Eingriff mit der Rastscheibe bringbar ist.

2. Ständer nach Anspruch 1 **dadurch gekennzeichnet**, **daß** die Rastscheibe (24) auf der Innenseite einer ersten mit ihrem Zentrum die Schwenkach-se (14) der Ständer-Segmente (11, 12) umfassenden napfförmigen Gehäusescheibe (21) konzentrisch zur Schwenkachse (14) und das Riegelelement (26) ebenfalls auf der Innenseite einer zweiten mit ihrem Zentrum die Schwenkachse (14) der Ständerelemente (11,12) umfassenden Gehäusescheibe (22) gleicher Ausbildung exzentrisch zur Schwenkachse (14) angeordnet sind, daß jede Gehäusescheibe (21, 22) jeweils mit ihrer Außenfläche an je einem Ständer-Segment (11,12) befestigt ist, und daß beide Gehäusescheiben (21, 22) einander umfassend das Richtsperrgetriebe (20) umschließen.

3. Ständer nach den Ansprüchen 1 und 2 **dadurch gekennzeichnet**, daß die Anschläge (32,33) für den den Rasthebel (26) außer Eingriff mit der Rastscheibe (24) bringenden, auf der Schwenkachse (14) gelagerten Schlepphebel (30) auf der dem Schlepphebel (30) zugewandten Seite der Rastscheibe (24) angeordnet sind und einen Winkelabstand von etwa 90° aufweisen.

4. Ständer nach den Ansprüchen 1 bis 3 **dadurch gekennzeichnet**, **daß** die Schwenkachse (14) ein mit der einen Gehäusescheibe (21) fest verbundener Lagerbolzen (38) ist, auf den die andere Gehäusescheibe (22) schwenkbar gelagert und von einem Halteglied (Mutter 40) gehalten ist.

5. Ständer nach den Ansprüchen 1 bis 4 **dadurch gekennzeichnet, daß** die den Rasthebel (26) beaufschlagende Feder (25) mit ihrem freien Ende in einer Öffnung (27) der Gehäusescheibe (22) gehalten ist.

6. Ständer nach den Ansprüchen 1 bis 5 **dadurch gekennzeichnet**, **daß** die den Rasthebel (26) tragende Gehäusescheibe (22) eine Montageöffnung (39) aufweist.

## Claims

1. Stand, particularly a keyboard stand, with two interconnected double-T-shaped stand sections which are pivotable with a scissor movement from a position of rest into an in-use position and with a pivot shaft which is associated with a locking ratchet which determines the pivoting angle and thus the operating height of the sections of the stand and of which a detent element is associated with one stand section while the locking element operating in opposition to the force of a spring is associated with the other stand section, characterised by the fact that the locking ratchet comprises a directional locking mechanism (20) with a detent plate (24) which has a number of detent positions (31₁ to 31ₙ) while the locking element comprises a detent engaging lever (26) which is positioned tangentially to the detent plate (24) and which in the radial direction engages the detent positions (31) and with which is associated a control member (30) which is mounted to be pivotable between two stops (32,33) and by means of which the detent engaging lever is maintained disengaged from the detent plate when between the first and the second stop and wherein, after movement to the first operating position (31₁) which is associated with stop (32), the detent lever is released for engagement with the detent plate (24), the detent lever, after assuming final operation position (31ₙ) which is defined by the further stop (33) and into which the control member (30) is drawn by the detent engaging lever (26) being caused to disengage from the detent plate.

2. Stand according to Claim 1, characterised by the fact that the detent plate (24) is located on the inside of a first cup-shaped housing plate (21) centred on the pivot shaft (14) of the stand sections (11,12) and concentric with the pivot shaft (14), the locking element (detent engaging lever) (26) being situated on a similarly constructed second housing plate (22) centered on the pivot shaft (14) of the stand sections (11,12) and concentric with the pivot shaft (14), each housing plate (21,22) being fixed by an outer surface to one of the two stand sections (11,12), the two housing plates (21,22), of which one embraces the other, surrounding the directional locking mechanism (20).

3. Stand according to Claims 1 and 2, characterised by the fact that the stops (32,33) for the control member (30) which is mounted on the pivot shaft (14) and which causes the detent engaging lever (26) to disengage from the detent plate (24) are positioned on that side of the detent plate (24) which faces the control member (30) at an angle of about 90° apart.

4. Stand according to Claims 1 to 3, characterised by the fact that the pivot shaft (14) is a bearing stub (38) which is rigidly connected with one housing plate (21) and on which the other housing plate (22) is pivotably mounted and held by a securing device (nut 40).

5. Stand according to Claims 1 to 4, characterised by the fact that the spring (25) acting on the detent engaging lever (26) is retained by a free end in an aperture (27) in the housing plate (22).

6. Stand according to Claims 1 to 5, characterised by the fact that the housing plate (22) bearing the detent engaging lever (26) is provided with an aperture (39) facilitating assembly.

## Revendications

1. Support, en particulier support de clavier, comprenant deux segments de support en double T articulés de façon à pouvoir pivoter à la manière de ciseaux d'une position de repos dans une position de travail, à l'axe de pivotement desquels est associé un dispositif d'encliquetage à cliquet qui détermine l'angle de pivotement et donc la hauteur de travail des segments de support, dont l'élément à crans d'arrêt est associé à l'un des segments de support et dont l'élément à cliquet agissant contre la force d'un ressort est associé à l'autre segment de support, **caractérisé en ce** que le dispositif d'encliquetage à cliquet est un mécanisme de blocage directionnel(20) dont le disque à crans d'arrêt (24) comporte plusieurs crans d'arrêt (31₁ à 31ₙ) déterminant les positions de travail, alors que l'élément à cliquet est un levier à cliquet (26) disposé tangentiellement par rapport au disque à crans d'arrêt (24) et s'engageant radialement dans les crans d'arrêt (31) auquel est associé un organe de commutation (30) monté de manière pivotante entre deux butées (32, 33) par l'intermédiaire duquel le levier à cliquet est dégagé du disque à crans d'arrêt entre les première et deuxième butées, qui est libéré, après le passage à la première position de travail (31₁) à laquelle est associée la butée (32), en vue de l'enclenchement dans le disque à crans d'arrêt (24), et qui, après avoir occupé sa dernière position de travail (31ₙ) définie par l'autre butée (33) et dans laquelle l'organe de commutation (30) est entraîné par le levier à cliquet (26), peut être dégagé du disque à crans d'arrêt.

2. Support selon la revendication 1, caractérisé en ce que le disque à crans d'arrêt (24) est monté, concentriquement à l'axe de pivotement (14), sur la surface intérieure d'un premier flasque de boîtier (21) en forme de cuvette dont le centre entoure l'axe de pivotement (14) des segments de support (11, 12), que l'élément à cliquet (26) est également disposé, de manière excentrée par rapport à l'axe de pivotement (14), sur la surface intérieure d'un second flasque de boîtier (22) de forme identique dont le centre entoure l'axe de pivotement (14) des éléments de support (11, 12), que chacun des flasques de boîtier (21, 22) est fixé avec sa surface extérieure à chaque fois sur un segment de support (11, 12), et que les deux flasques de boîtier (21, 22), en s'emboîtant l'un dans l'autre, enveloppent le mécanisme de blocage directionnel (20).

3. Support selon les revendications 1 et 2, caractérisé en ce que les butées (32, 33) pour le levier d'entraînement (30)monté sur l'axe de pivotement (14) et libérant le levier à cliquet (26) du disque à crans d'arrêt (24), sont disposées sur le côté du disque à crans d'arrêt (24) tourné vers le levier d'entraînement (30) et avec une distance angulaire d'environ 90°.

4. Support selon l'une des revendications 1 à 3, caractérisé en ce que l'axe de pivotement (14) est un axe de palier (38) solidaire du flasque de boîtier (21) et sur lequel l'autre flasque de boîtier (22) est monté de manière pivotante et maintenu par un élément de retenue (écrou 40).

5. Support selon l'une des revendications 1 à 4, caractérisé en ce que le ressort (25) chargeant le levier à cliquet (26) est maintenu avec son extrémité libre dans une ouverture (27) du flasque de boîtier (22).

6. Support selon l'une des revendications 1 à 5, caractérisé en ce que le flasque de boîtier (22) portant le levier à cliquet (26) présente une ouverture de montage (39).
